# EUROPEAN PATENT APPLICATION

(11) **EP 4 726 988 A1**
(43) Date of publication of application: **15.04.2026**
(21) Application number: 25206629.5
(22) Date of filing: 03.10.2025
(51) Int. Cl.: H02M 1/32, H02M 7/487, H02M 7/483, H02M 7/5395

(54) **METHODS AND SYSTEMS FOR MULTILEVEL CONVERTERS**

(30) Priority: 10.10.2024 US 202418912189
(71) Applicant: Analog Devices International Unlimited Company, Limerick (IE)
(72) Inventor: RODRIGUEZ, Juan Carlos, Wilmington, MA 01887 (US); VISWADEV DAMODARAN, Roopa, Co. Limerick (IE); HOLLAND, William Michael James, Co. Limerick (IE)
(74) Representative: Yang, Shu

(57) **Abstract**

There is provided methods and systems for balancing junction temperatures between at least two power switches of a multilevel converter. A junction temperature of each of the at least two power switches is received. A difference in junction temperature between the at least two power switches is determined. A ratio of operating time for which the multilevel converter operates using a first pulse width modulation, PWM, mode of a plurality of PWM modes is defined based on closed loop control in order to reduce the difference in junction temperature of the at least two power switches. Finally, a control signal is generated to operate the multilevel converter using the first PWM mode for the ratio of operating time.

## Description

This patent application claims the benefit of and priority to U.S. Non-Provisional Patent Application No. 18/912,189, filed on October 10, 2024.

### FIELD

This application relates to methods and systems for controlling temperatures in a multilevel converter and, in particular but not exclusively, to methods and systems for controlling the modulation of power switches in a multilevel converter in order to achieve thermal balancing of the power switches.

### BACKGROUND

Power converter devices output different voltage levels, for example, generating higher voltage waveforms from lower voltage waveforms, or vice versa. Multilevel converters, in particular, output waveforms with more than two voltage levels at different times if looking at phase-to-neutral voltage.

Recently, active neutral point clamped (ANPC) inverters are a type of power converter having a multilevel topology and they have become a popular solution for reducing harmonics in power transmission and motor drive applications. For example, in the field of renewable energy systems, ANPC inverters are typically used due to their flexibility in the modulation techniques that they can implement and increased reliability in comparison to other multilevel inverter topologies.

However, the ANPC topology for the implementation of three phase inverters has the disadvantage of uneven semiconductor junction temperature distribution. This may lead to unequal utilization of the power switches, which reduces the efficiency and operational lifetime of the inverters when compared to competing topologies.

In order to solve this problem, various pulse width modulation (PWM) techniques have been proposed for use with the three level ANPC inverter. However, losses can still be difficult to control, in particular, thermal losses.

Therefore, it is desirable to provide an improved solution for reducing thermal losses in multilevel converter devices.

### SUMMARY OF THE DISCLOSURE

The systems and methods of the present disclosure provide ways in which to balance and therefore reduce overall thermal losses in multilevel converters. The present disclosure not only enhances the efficiency of multilevel converters but also extends their operational lifespan by mitigating thermal stress on individual power switches.

In one aspect of the present disclosure, there is provided a method of balancing junction temperatures between at least two power switches of a multilevel converter, the method comprising: receiving a junction temperature of each of the at least two power switches; determining a difference in junction temperature between the at least two power switches; defining a ratio of operating time for which the multilevel converter operates using a first pulse width modulation, PWM, mode of a plurality of PWM modes based on closed loop control in order to reduce the difference in junction temperature of the at least two power switches; and generating a control signal to operate the multilevel converter using the first PWM mode for the ratio of operating time.

The plurality PWM modes allows for improved thermal management of the multilevel converter, enabling the system to adapt to varying operational conditions. The method of the present disclosure results in the thermal load being more evenly distributed across the power switches, thereby preventing any single power switch from overheating and potentially failing.

Preferably, the PWM modes are different from one another and a PWM mode comprises a pattern of switching patterns of the power switches. For example, a pattern of switching pulses of the power switches in the first PWM mode is different to a pattern of switching pulses of the power switches in other PMW mode(s) of the multilevel converter. Thus, when swapping from operating the multilevel converter from one PWM to another PWM mode, the thermal loss profile of the power switches will change.

The ratio of operating time may be represented as a percentage of time of a total period of all of the PWM modes. That is to say, the total of the ratios equals 100%. It will be appreciated that it is possible to define a ratio of operating time in a PWM mode as 0.0 or 0%.

Once a ratio of operating time in a first PWM mode has been defined, the ratio(s) of operating time in the other PWM modes(s) may preferably be determined in one of the following ways.

The ratio of operating time in the first PWM mode may determine the ratio(s) of operating time in the other PWM mode(s). For example, a further control signal may be generated to operate the multilevel converter using the remainder of the plurality of PWM modes for a remainder of the time. In an example where there are two PWM modes and a ratio of operating time in the first PWM mode is 0.6 or 60%, then a ratio of operating time in the second PWM mode is 0.4 or 40%.

Alternatively, a ratio of operating time for at least one other PWM mode may be defined based on closed loop control in order to reduce the difference in junction temperature of the at least two power switches. Then, a control signal to operate the multilevel converter using each of the ratios of operating time for at least one other PWM mode may be generated. In an example where there are three PWM modes and a ratio of operating time in the first PWM mode is 0.6 or 60%, and a ratio of operating time in the second PWM mode may be defined as 0.3 or 30% and a ratio of operating time in the third PWM mode may be defined as 0.1 or 10%, each based on closed loop control in order to reduce the difference in junction temperature of the at least two power switches.

In some preferred examples, a ratio of operating time may be defined for each PWM mode. In this case, the number of power switches considered for temperature balancing is the same as the number of ratios to be defined, which is the same as the number of PWM modes used, which is the number of closed loop controls minus 1. Thus, in an example where there are three PWM modes, the ratios of operating time in first and second PWM modes are determined using two closed loop controls as 0.6 or 60%, and 0.3 or 30%, and a ratio of operating time in the third PWM mode may be defined as 0.1 or 10%, in order to reduce the difference in junction temperatures of at least three power switches.

A combination of the two above ways for determining the ratio(s) of operating time in the other PWM modes(s) (i.e. the first way being using the remainder of the plurality of PWM modes for a remainder of the time, and the second way being defining a ratio of operating time for at least one other PWM mode than the first PWM mode) may also be used. In an example where there are four PWM modes, and a ratio of operating time in the first PWM mode is 0.6 or 60%, then a ratio of operating time in the second PWM mode may be defined as 0.3 or 30%, and a ratio of operating time in the third and fourth PWM modes may be used to operate the multilevel converter for a remainder of the time, for example, by splitting the ratio of operating time in the third and fourth PWM modes equally, i.e. 0.1 or 10% each. Once the ratios of operating time are defined, then a total period of operation for all of the PWM modes may be determined. The time of operation in a particular PWM mode is defined by the product of the ratio and the total period. The time of operation in a particular PWM mode may be defined as a swapping period.

Preferably, the method further comprises adjusting the ratio or ratios of operating time dynamically based on real time junction temperature information of the at least two power switches.

A predefined swapping period for operating the plurality of PWM modes may be applied. The predefined swapping period is equal to a total period of operation for all of the PWM modes. Preferably, the predefined swapping period defines a minimum swapping frequency for swapping between the plurality of PWM modes.

From knowing the predefined swapping period, a predefined swapping frequency may also be determined. For example, if the predefined swapping period is 0.1 seconds, then the predefined swapping frequency is 10Hz. In another example, if the predefined swapping period is 1 millisecond, then the predefined swapping frequency is 1kHz.

Preferably, the closed loop control is implemented using linear control. Examples of closed loop linear control include proportional, P, controller, proportional-integral, PI, controller, or a proportional-integral-derivative, PID, controller. In linear control, PI control may preferably be used as it provides better results than P control and PID control may be hard to stabilise. In non-linear control, machine learning may be used to define the ratio(s) of operating time for one or more of the PWM modes.

Preferably, reducing the difference in junction temperature of the at least two power switches comprises minimising the difference in junction temperature of the at least two power switches.

The at least two power switches of the multilevel converter may be selected because they have different thermal losses or different thermal loss profiles. Different thermal losses may be between the two power switches in a particular PWM mode, for example, the first PWM mode. Different thermal loss profiles may indicate a power switch having different switching patterns across different PWM modes.

For instance, a first PWM mode may call for two power switches, S2 and S3, to switch ON/OFF less frequently, than the other power switches, S1, S4, S5, S6, in a first PWM mode (and so the effect is that S2 and S3 heat up less than S1, S4, S5, S6 since more switching ON/OFF leads to more heat dissipation). Therefore, the effect of junction temperature balancing according to the methods of the present disclosure may be greater by determining a difference in junction temperature between one of S2 and S3 with one of S1, S4, S5, S6.

Following on from the above example, it may be known that the thermal loss profile or switching patterns of S2, S3, S1, S4 is different in another PWM mode compared with the first PWM mode; the thermal loss profile or switching patterns of S5 and S6 is similar in each of the PWM modes. In this case, the effect of junction temperature balancing according to the methods of the present disclosure may be greater by determining a difference in junction temperature between one of S2 and S3 with one of S1 and S4.

The present disclosure also encompasses balancing junction temperature of more than two power switches. For example, if balancing more than two power switches, then power switches having the most dissimilar thermal losses or the most dissimilar thermal loss profiles may be selected.

Receiving the junction temperature of the two or more power switches may comprise modelling the junction temperature of the at least two power switches based on look up tables. Alternatively, receiving the junction temperature of the two or more power switches may comprise a real time calculation, for example, in the knowledge that temperature rises are proportional to power loss (Ploss=I*V), then voltage and current may be calculated in real time and other necessary parameters may be estimated.

Alternatively, receiving the junction temperature of the two or more power switches may comprise measuring the junction temperature by direct die temperature measurement for each of the two or more power switches.

Preferably, measuring the junction temperature by direct die temperature measurement for each of the two or more power switches comprises measuring the junction temperatures using a highly integrated SiC-Cascode power switch or a similar device.

The ratio of operating time in one or more of the PWM modes may be selected for one phase of the multilevel converter. Preferably, ratio of operating time in one or more of the PWM modes may be selected for each phase of the multilevel converter, for example, for each of three phases. Thus, each phase applies different ratios of operating times of the PWM modes, according to the specific thermal losses of the switches in each phase, respectively. This may be preferred to obtain very accurate junction temperature balancing for each phase.

Alternatively, the PWM mode may be selected for three phases of the multilevel converter. In other words, the same ratios may be applied for each phase for simplicity of implementation.

In a preferred example, there is provided there is provided a method for thermal dissipation balance of power switches for three level/multi level active neutral point clamped inverters, comprising: inputting the measured junction temperature from the power switches (e.g., smart switch) to a proportional integral (PI) controller (linear/ stable controller) for temperature balancing; the PI controller uses temperature balance algorithm to balance the measured junction temperature for all operating conditions, wherein the PI controller operates in two modes for controlling the predefined swapping frequency of PWM mode change through a switching pulse generator, wherein the minimum switching frequency of power switches is known and controllable.

In another aspect of the present disclosure, there is provided a system for balancing junction temperatures between at least two power switches of a multilevel converter, the system comprising: a closed loop controller configured to: receive a junction temperature of each of the at least two power switches; determine a difference in junction temperature between the at least two power switches; define a ratio of operating time for which the multilevel converter operates using a first pulse width modulation, PWM, mode of a plurality of PWM modes based on closed loop control in order to reduce the difference in junction temperature of the at least two power switches; and generate a control signal to operate the multilevel converter using the first PWM mode for the ratio of operating time.

Preferably, the closed loop controller may comprise a linear closed loop controller. However, alternatively, the closed loop controller may comprise a non-linear closed loop controller.

The system may further comprise the multilevel converter. The multilevel converter may have three levels. Alternatively, the multilevel converter may have any number of levels above three, preferably an odd number of levels such as five, seven or nine levels.

The multilevel converter may have three phases. Alternatively, the multilevel converter may have a single phase.

The multilevel converter may be an inverter. The multilevel inverter may have active zero-state switches. The multilevel inverter may preferably be an active neutral point clamp, ANPC, inverter.

The multilevel converter may comprise three pairs of power switches in a half bridge leg, and the at least two power switches belong to different pairs of the three pairs of power switches.

However, it will be appreciated that the methods and systems of the present disclosure may also apply to other multilevel converters with alternative topologies having different phases and different numbers of levels. For example, the methods and systems of the present disclosure may also be applicable to single phase full bridge inverters, five level ANPC inverters and five level cascaded H bridge (CHB) inverters.

### Definitions

A 'power converter' is an electronic device that converts voltages from one form into another. It includes devices that convert AC to DC (for example, rectifiers), DC to AC (for example, inverters), DC to DC (for example, buck converters), and AC to AC (for example, dimmer switches).

A 'multilevel converter' is a power converter device that output more than one voltage level.

An 'inverter' is a type of power converter that is used for DC to AC conversion. For example, in the field of renewable energy, an inverter may be used to convert DC power from a solar panel into AC power that can be fed into the electric grid and used by household appliances.

A power switch may suffer thermal losses including switching on losses, conduction losses and switching off losses.

'Pulse width modulation (PWM)' is a technique for controlling the average output power of an electrical signal by defining a duty cycle and switching frequency of each of the power switches to switch on and off. A PWM mode defines a switching pattern for the power switches.

'Proportional control', 'integral' control, and 'derivative' control, as well as combinations of these control methods, are examples of linear, closed loop, feedback control techniques. Proportional control provides a linear relationship between the error of a system and the output of the system. Integral control provides a correlation between the integral of the error of the system and the output of the system. Derivative control provides a correlation between the derivative of the error of the system and the output of the system.

### FIGURES

Aspects of the present disclosure are described, by way of example only, with reference to the following drawings, in which:
Figure 1 shows an active neutral point clamped inverter system;
Figure 2 shows the output of the system of Figure 1;
Figure 3 shows an active neutral point clamped inverter system in accordance with the present disclosure;
Figure 4 shows thermal losses of power switches in accordance with the present disclosure;
Figure 5 shows an active neutral point clamped inverter system including a controller in accordance with the present disclosure;
Figure 6 shows the effect of PWM swapping on the switching pulses in accordance with the present disclosure;
Figure 7 shows the positive half cycle of Figure 6 in accordance with the present disclosure;
Figure 8 shows the negative half cycle of Figure 6 in accordance with the present disclosure;
Figure 9 illustrates junction temperature balancing in accordance with the present disclosure;
Figure 10 represents example method steps according to an aspect of the present disclosure;
Figure 11 shows a single phase full-bridge inverter system in accordance with the present disclosure;
Figure 12 shows a comparison of unequal thermal losses of power switches in accordance with the present disclosure;
Figure 13 illustrates junction temperature balancing in accordance with the present disclosure;
Figure 14 shows a five level ANPC inverter system in accordance with the present disclosure;
Figure 15 shows the phase-to-neutral output voltage of the system of Figure 14;
Figure 16 shows a controller for a five level ANPC inverter system in accordance with the present disclosure;
Figure 17 shows a five level cascaded H bridge (CHB) inverter system in accordance with the present disclosure; and
Figure 18 shows a controller for a five level cascaded H bridge (CHB) inverter system in accordance with the present disclosure.

### DETAILED DESCRIPTION

Simple techniques for reducing thermal losses using singular PWM strategies have been proposed for power converters. However, these methods have the disadvantage of giving losses in the switches that are not balanced for all operating conditions; a single PWM solution alone cannot achieve equivalent power loss distribution, required for equal utilization of all the switches. For example, a particular PWM technique may only accomplishes balancing of one pair of the switches in a half bridge leg of the power converter topology.

More complex control techniques such as adaptive control techniques have also been proposed. For example, it has been suggested to select between two PWM techniques once the thermal characteristics of the power converter reaches certain thresholds in a hysteretic manner with an oscillatory response. However, these methods have the disadvantage of high processor utilization and a coarse and non-linear output.

As described in the background section, it is desirable to provide an improved solution for reducing thermal losses in multilevel converter devices.

The present inventors have recognised that a way in which to balance temperature of the power switches of a multilevel converter and therefore reduce overall thermal losses is to use a closed loop controller to determine which PWM mode to use based on the temperature of at least two of the power switches. Essentially, the actuating technique in this control system is the choice of a PWM technique from at least two PWM modes, so that the difference in temperature between two power switches can be minimised. Further, the present inventors have recognised that the imbalance of temperature amongst the two power switches can be reduced using closed loop feedback control. In contrast to previous methods and systems, whereby a controller provides a signal that directly controls the power switches by changing the PWM technique, the closed loop controller of the present disclosure provides a signal that selects between various PWM modes for operating the power switches.

An important benefit of the present disclosure is that is actually equalizes the power losses amongst the power switches, and hence balancing the temperature distribution among them. This leads to an overall reduction in thermal losses, an increase in the available output power and reliability of the multilevel converter.

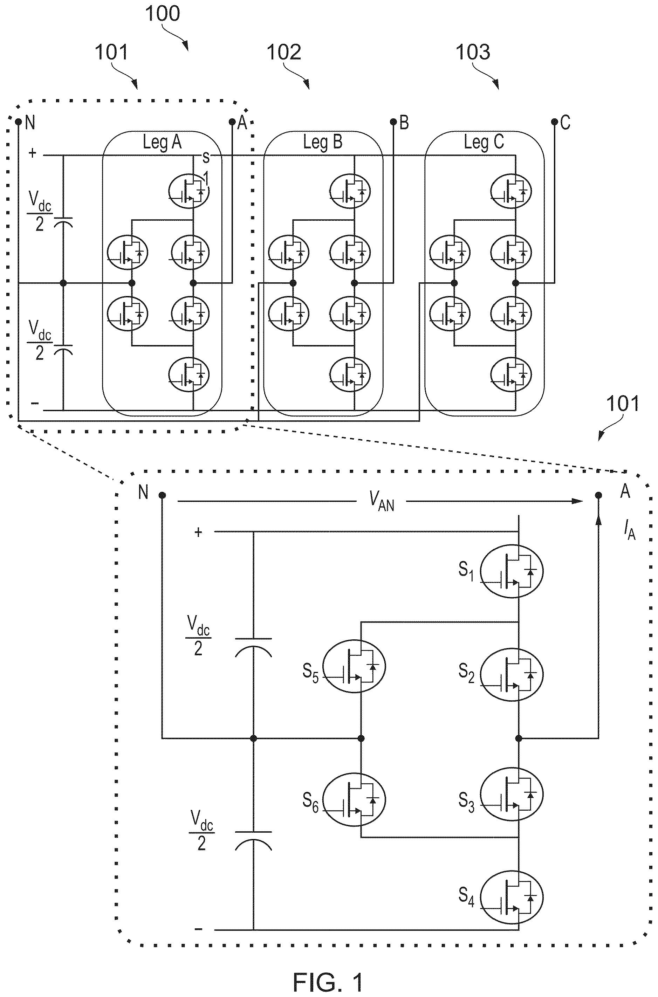

Figure 1 shows a three phase three level 'active neutral point clamped (ANPC)' inverter 100. The ANPC inverter operates in three phases (Phase A, Phase B and Phase C, each 120 degrees out of phase from one another) using three half bridge legs (Leg A 101, Leg B 102 and Leg C 103), respectively. For simplicity, Figure 1 focuses on the operation of phase A in Leg A 101.

Leg A has six power switches (three pairs of power switches in a half bridge leg) and two capacitors, producing three voltage level outputs by switching in a specific sequence, turning the power switches ON and OFF. The power switches shown in Figure 1 are IGBTs, but they may be other types of power switches in other examples, such as FETs. Preferably, the power switches may be SiC-Cascode FETs.

The three voltage levels are positive (+Vdc/2), neutral (0) and negative (-Vdc/2). When switches S1 and S2 are turned on and conducting, the output voltage is equal to +Vdc/2. When switches S2 and S5 are turned on and conducting, or when switches S3 and S6 are turned on and conducting, or when switches S2, S3, S5 and S6 are turned on and conducting, the output voltage is zero (neutral point at the centre of the DC link). When switches S3 and S4 are turned on and conducting, the output voltage is equal to -Vdc/2.

**Table 1**

| **Condition of switching device** | | | | | | **Inverter output voltage** |
|---|---|---|---|---|---|---|
| **S₁** | **S₂** | **S₃** | **S₄** | **S₅** | **S₆** | **V_{AN}** |
| 1 | 1 | 0 | 0 | 0 | x | V_{dc}/2 |
| 0 | 1 | 0 | x | 1 | 0 | 0 |
| x | 0 | 1 | 0 | 0 | 1 | 0 |
| 0 | 1 | 1 | 0 | 1 | 1 | 0 |
| 0 | 0 | 1 | 1 | x | 0 | -V_{dc}/2 |

Compared with 'neutral point clamped' (NPC) inventers, the ANPC inverter replaces two diodes with power switches S5 and S6, which clamp the neutral point and allow for better control of the voltage balance across the two capacitors and therefore better control of the output voltage levels as well as reduced stress on the power switches.

Advantages of ANPC inverters over NPC inverters include reduced harmonics in the output waveform, improved efficiency of the inverter and improved voltage balancing by using active clamping.

Due to the reduced harmonics, improved efficiency and improved voltage balancing, popular applications of ANPC inverters include those that require a steady sine wave AC output, such as renewable energy systems and industrial motor drivers.

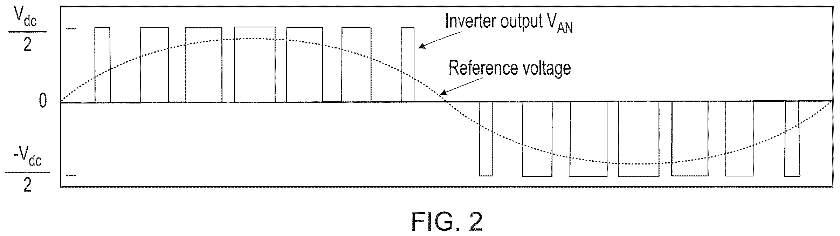

In Figure 2, it is shown that by controlling the switching states, the ANPC inverter can produce a stepped waveform that approximates a sine wave. Pulse width modulation (PWM) techniques can be used to control the order of the switching of the power switches, thus ensuring that the output waveform is as close to a sine wave as possible. Figure 2 shows the phase to neutral voltage produced by one leg of the inverter.

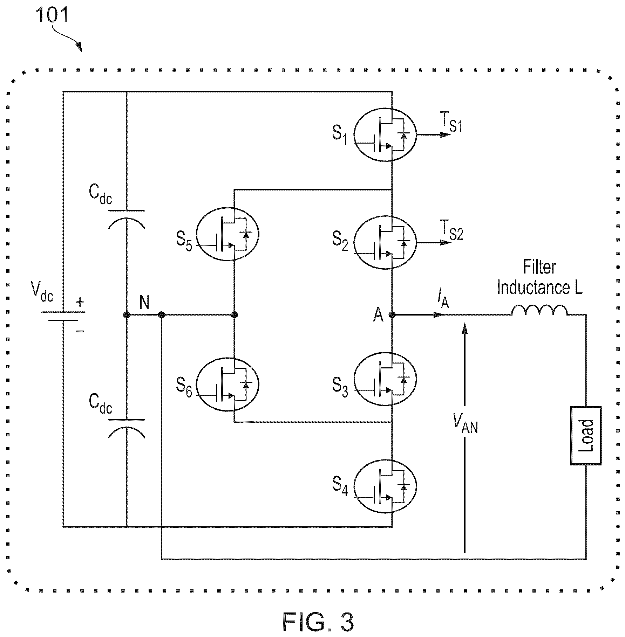

Figure 3 shows a phase of an active neutral point clamped inverter system in accordance with the present disclosure. In particular, Figure 3 shows one phase leg of the converter, with its input voltage source and output load.

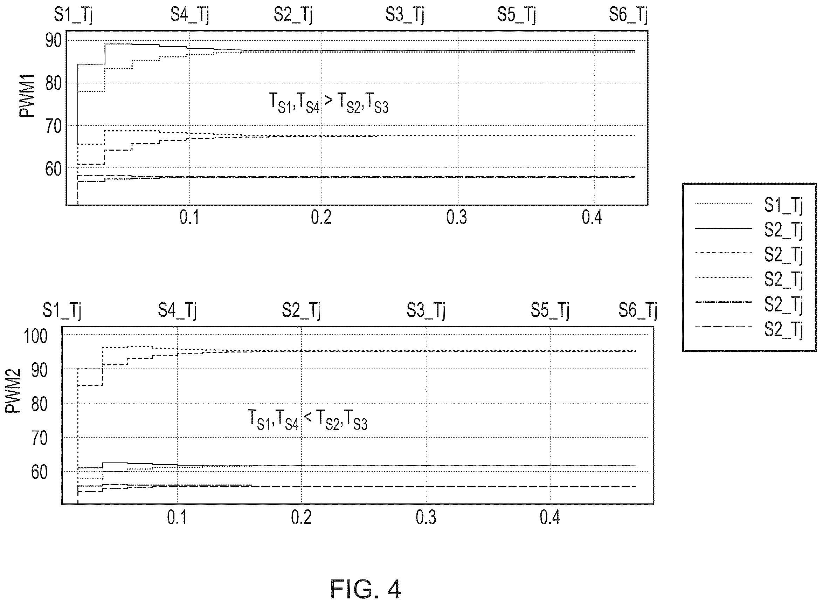

Figure 4 shows thermal losses of the power switches of the phase of the ANPC inverter system of Figure 3 when operating the power switches using two different PWM modes.

As an example, the ratings of the system of Figure 3 may be as follows in Table 2:

**Table 2**

| **Parameters** | | **Values** | |
|---|---|---|---|
| DC link voltage | V_{dc} | 800 | V |
| DC link capacitance | Cdc | 1000 | µF |
| AC output voltage (RMS phase voltage) | Vₒ | 230 | V |
| Switching frequency | f_{sw} | 100 | kHz |
| Filter Inductance | L | 3 | mH |
| Load power | | 10 | kW |

However, it will be appreciated that other values for the parameters in Table 2 may also apply to the present disclosure.

In the half leg shown in Figure 3, the power losses and junction temperatures of the following pairs of switches are the same or similar: S1 and S4, S2 and S3, S5 and S6. The junction temperature of a power switch may be determined by modelling the temperature using information from look up tables. Alternatively, the junction temperature of a power switch may be determined by measuring the junction temperature by direct die temperature measurement. An example of a way in which to achieve direct die temperature measurement is by using a highly integrated SiC-Cascode power switch.

The junction temperatures of switches S1 and S2 are used in the example of Figure 3. The temperatures of switches S1 and S2 are T_{S1} and T_{S2}, respectively. Using the closed loop controller, it is possible to find a difference between temperatures T_{S1} and T_{S2}. In some examples, Tₛ₁ and Tₛ₂ may be fed to a microcontroller (not shown in the Figures), which can determine the difference between Tₛ₁ and Tₛ₂ and outputs said difference for defining a ratio of operating time for which the multilevel converter operates using a first pulse width modulation, PWM, mode of a plurality of PWM modes based on closed loop control in order to reduce the difference in junction temperature of the at least two power switches.

The closed loop controller may comprise a linear controller such as a PI controller. In this example, there are two PWM modes that the multilevel converter operates under, PWM1 and PWM2. The linear PI controller may define a ratio of operating time for which the multilevel converter operates using a first pulse width modulation mode, PWM1, and a ratio of operating time for which the multilevel converter operates using the second pulse width modulation mode, PWM2, in order to reduce the difference in junction temperatures T_{S1} and T_{S2}.

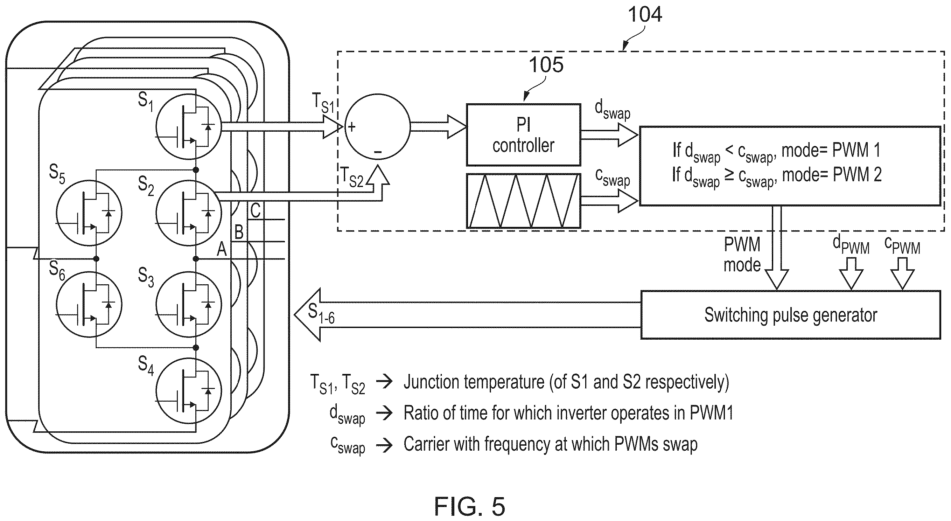

Figure 5 shows the three phases of the ANPC inverter 100 of Figure 3 and also includes the closed loop controller 104, which comprises the PI controller 105. As shown in Figure 5, the difference between T_{S1} and T_{S2} are input into the PI controller 105.

Example parameters for the algorithm used by the PI controller 105 to select which of PWM1 and PWM2 to use are given in Table 3.

**Table 3**

| **Parameters** | | **Values** | |
|---|---|---|---|
| Swapping frequency (rate of swapping between PWM1 and PWM2) | f_{swap} | 10 | kHz |
| PI controller values | Kₚ, Kᵢ | 0.003, 0.05 | |

The predefined swapping frequency is derived from a predefined swapping period, which is a total period of operation for all of the PWM modes. In this case, the predefined swapping period is 0.1 milliseconds.

In Figure 5, the ratio of operating time for which the multilevel converter operates using a second pulse width modulation (PWM2) mode of two PWM modes is denoted as d_{swap}. A carrier frequency f_{swap} is the frequency at which the PWM modes swap, and can be denoted f_{swap} = 1/T_{swap} = 1/0.1milliseconds = 10 kHz.

f_{swap} determines the operating time of each PWM from the ratio d_{swap}. In this example, the operating time of PWM1=(1-d_{swap})/f_{swap} and the operating time of PWM2=d_{swap}/f_{swap}.

Based on the output of the PI controller 105, a control signal (switching pulse generation in Figure 5) is generated in order to apply the selected PWM mode. The closed loop controller 104 therefore manages the operation of the ANPC inverter based knowledge of the junction temperatures of the switches, using different PWM modes to balance the thermal load between switches S1 and S2 in order to achieve an improved balance of junction temperatures across all of the power switches.

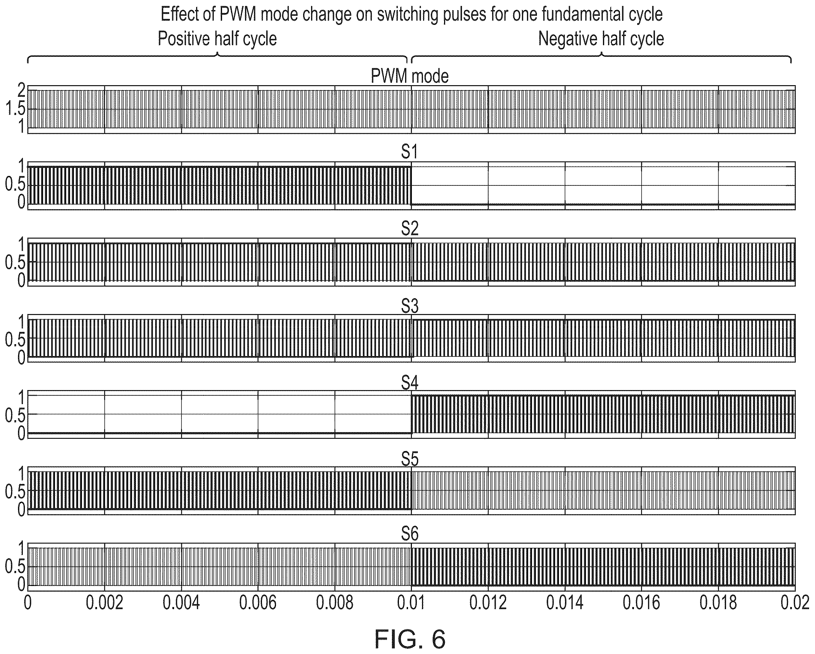

Figure 6 shows the effect of PWM swapping in accordance with the present disclosure and shows the effect of PWM swapping on the switching pulses of switches S1, S2, S3, S4, S5 and S6.

In the top graph, the PWM mode selected by the controller, PWM1 or PWM 2, over time is shown. Below this graph, six graphs are shown to illustrate the operation of switches S1, S2, S3, S4, S5 and S6 over time. The frequency at which the PWM mode changes between PWM1 and PWM2 is equal to f_{swap}. Hence, the minimum frequency at which any power switch operates, except for the power switch that remains off during any half cycle, is at least f_{swap} and the maximum frequency at which any power switch operates is equal to the switching frequency, f_{sw}.

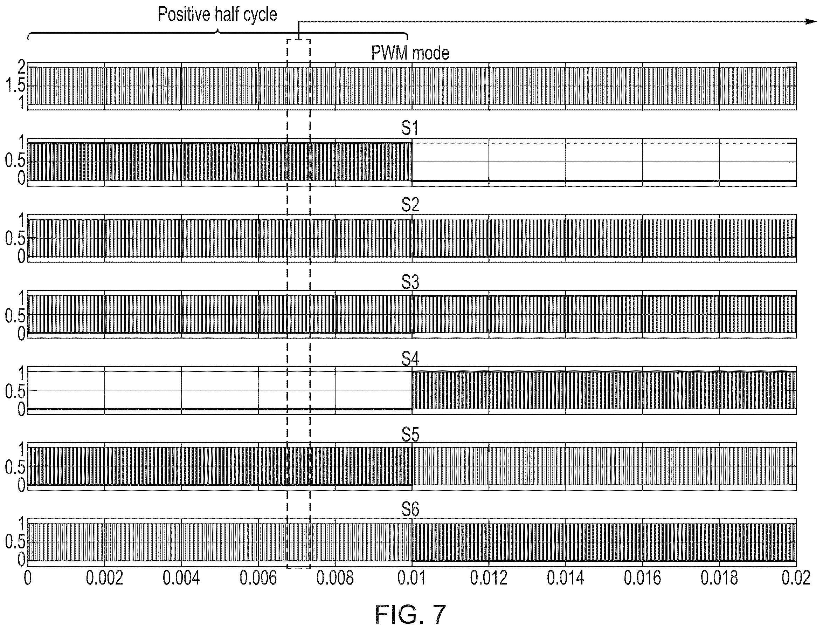

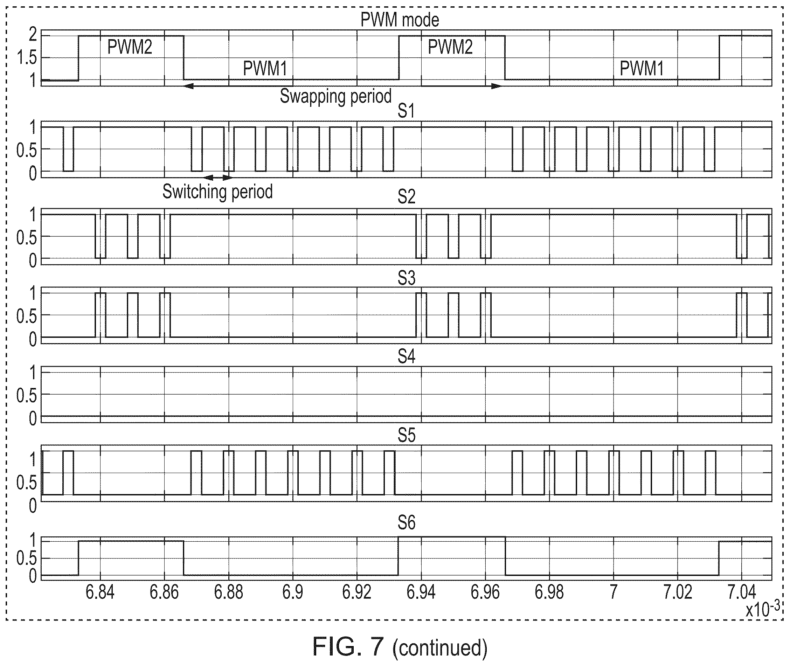

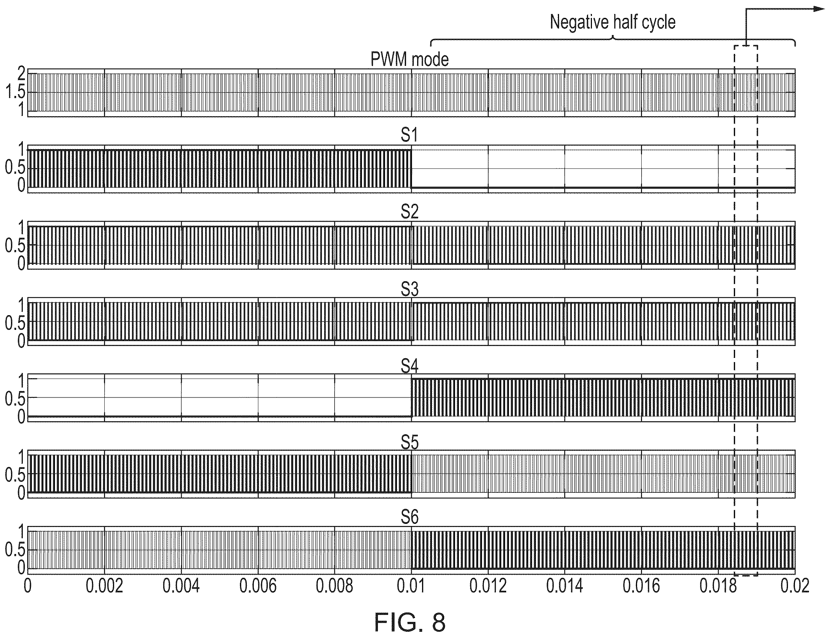

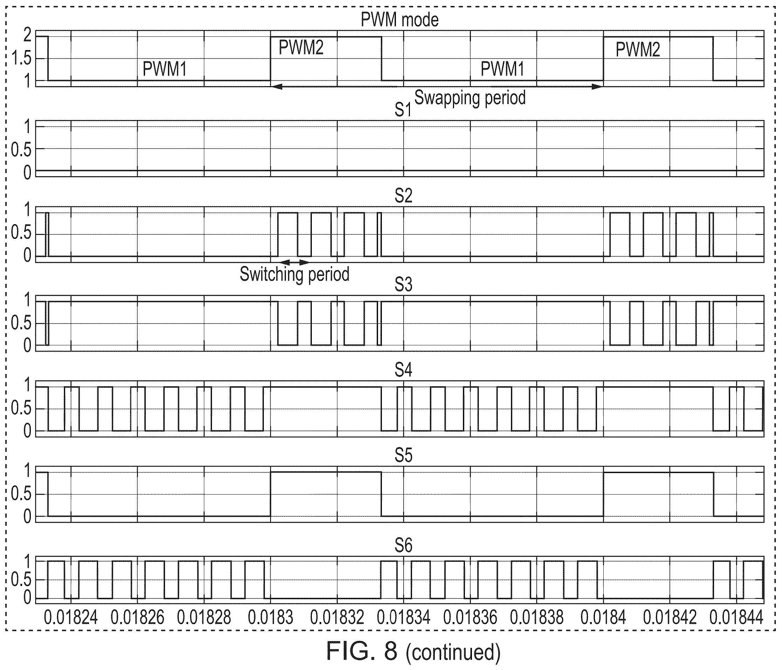

Figure 7 shows the positive half cycle and Figure 8 shows the negative half cycle of Figure 6 in more detail. The frequency of switching of all power switches are greater than the swapping frequency, f_{swap} and less than or equal to the switching frequency, f_{sw}, the only exceptions being switch S4, which remains OFF during the positive half cycle and S1, which remains OFF during the negative half cycle.

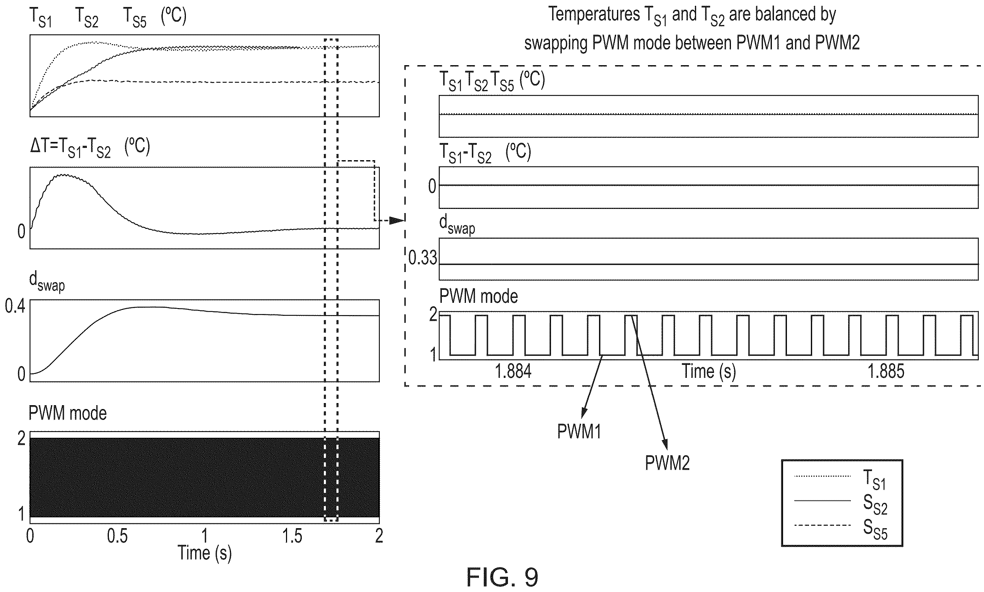

Figure 9 illustrates junction temperature balancing in accordance with the present disclosure.

The temperatures of switches S1, S2 and S5 are shown, of which the two switches selected for temperature balancing are S1 and S2. The temperatures of switches S1 and S2 eventually balance out over time. The difference between the temperatures of switches S1 and S2 is shown to reduce or minimise over time.

By using closed loop control, a controller takes the temperatures of S1 and S2 as inputs and it outputs a ratio of operating time for which the multilevel converter operates using a second pulse width modulation (PWM2) mode of two PWM modes in order to reduce the difference in junction temperature of S1 and S2. The ratio is denoted d_{swap} and it is shown to settle at 0.33 or 33%.

The bottom graph illustrates which PWM mode of the two PWM modes is active over time. PWM1 is active for 0.67 or 67% of the time and PWM2 is active for 0.33 or 33% of the time in order for the temperatures of S1 and S2 to settle at an equilibrium.

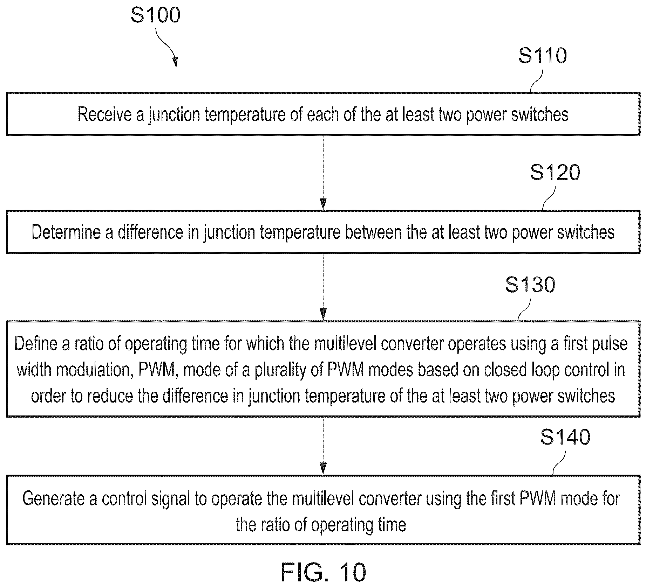

Figure 10 represents example method steps S100 according to an aspect of the present disclosure. In general, at step S110, a junction temperature of each of the at least two power switches is received. At step S120, a difference in junction temperature between the at least two power switches is determined. At step S130, a ratio of operating time for which the multilevel converter operates using a first pulse width modulation, PWM, mode of a plurality of PWM modes is defined based on closed loop control in order to reduce the difference in junction temperature of the at least two power switches. Finally, at step S140, a control signal is generated to operate the multilevel converter using the first PWM mode for the ratio of operating time.

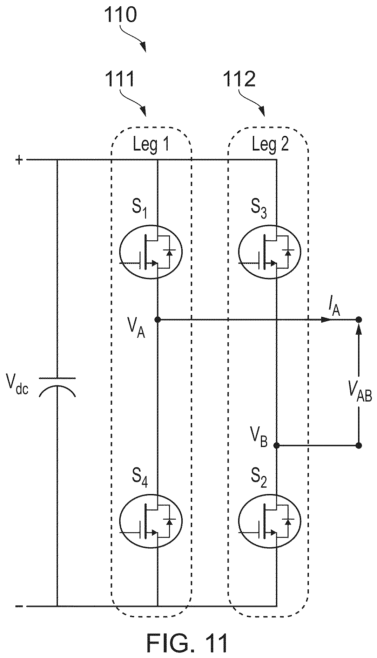

Figure 11 shows a single phase full bridge inverter 110. The single phase full bridge inverter 110 has a single phase using two half bridge legs (Leg 1 111 and Leg 2 112).

Leg 1 111 has two power switches and Leg 2 112 has two power switches, producing up to three voltage level outputs by switching in a specific sequence, turning the power switches ON and OFF.

The three voltage levels are positive (+Vdc/2), neutral (0) and negative (-Vdc/2).

**Table 4**

| **Condition of switching device** | | **Inverter output voltage** |
|---|---|---|
| **S₁=S̅₄̅** | **S₂=S̅₃̅** | **V_{AB}** |
| 1 | 1 | V_{dc} |
| 1 | 0 | 0 |
| 0 | 1 | 0 |
| 0 | 0 | -V_{dc} |

Among the different modulation methods existing for a full-bridge inverter, the hybrid pulse width modulation (HPWM) benefits from lower switching stresses on devices of one of the legs, resulting in lower overall losses. However, since one leg operates at a higher frequency than the other leg (which operates at a lower fundamental frequency), there can be unequal loss and temperature distribution. The control algorithm of the present disclosure may be used to achieve equal temperature distribution when hybrid PWM is used.

**Table 5**

| **Half cycle** | **Low frequency leg*** | **High frequency leg*** | **Inverter output voltage V_{AB}** |
|---|---|---|---|
| Positive | 1 | 1 | V_{dc} |
| | 1 | 0 | 0 |
| Negative | 0 | 1 | 0 |
| | 0 | 0 | -V_{dc} |

| | | | |
|---|---|---|---|
| * 1 and 0 indicate that the output terminal of the corresponding leg is connected to the + and - input terminals respectively | | | |

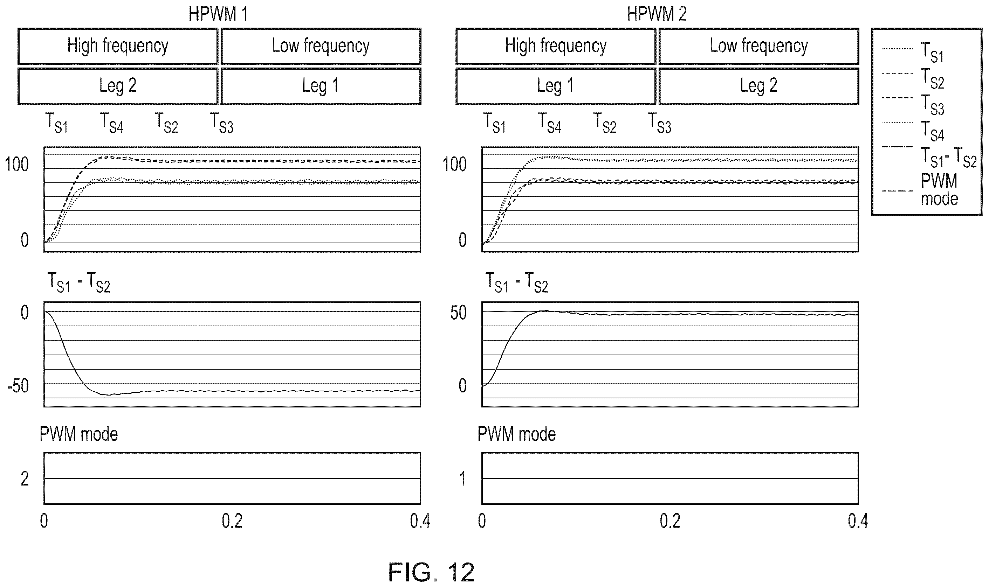

Figure 12 shows that the switches of a leg with high-frequency operation experience higher temperatures.

HPWM1 operates Leg 1 at low frequency and hence - decreases the temperatures of switches in Leg 1 (S1 and S4). HPWM2 operates Leg 2 at low frequency and hence- decreases the temperatures of switches in Leg 2 (S2 and S3).

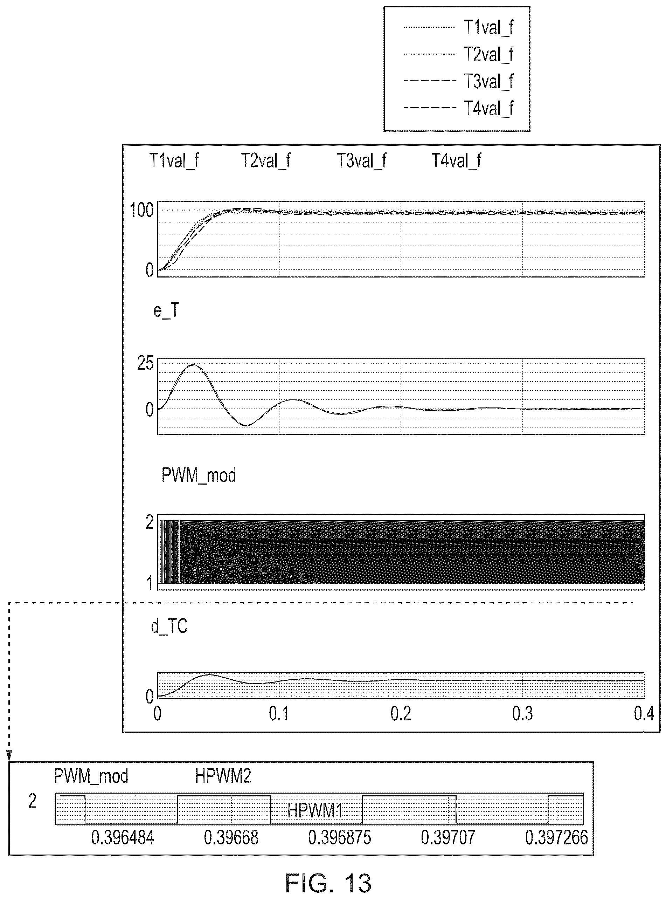

In Figure 13, a ratio of duration for HPWM1 and HPWM2 operation that balances the temperatures between power switches T_{S1} and T_{S2} is found to be 0.5.

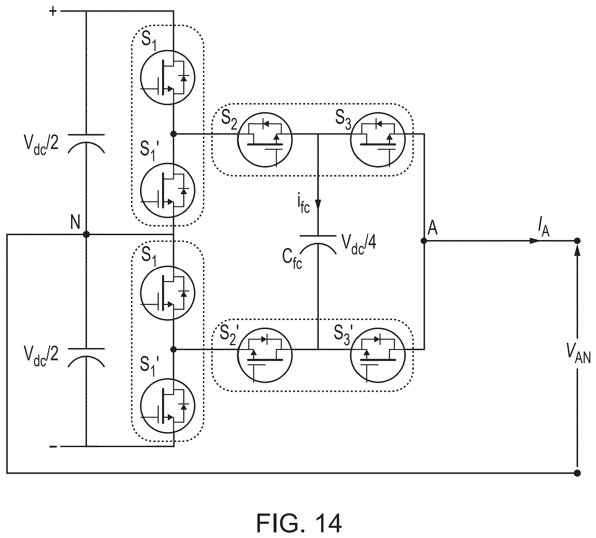

Figure 14 shows a five level ANPC inverter 140. The five level ANPC inverter leg has eight power switches (four pairs of power switches out of which two pairs switch identically), two DC link capacitors and one flying capacitor, producing five voltage level outputs by switching in a specific sequence, turning the power switches ON and OFF. The switching sequence may also ensure that the voltage across the flying capacitor, Cfc, is maintained at +Vdc/4.

The five voltage levels are positive high (+Vdc/2), positive low (+Vdc/4), neutral (0), negative low (-Vdc/4) and negative high (-Vdc/2). When switches S1, S2 and S3 are turned on and conducting, the output voltage is equal to +Vdc/2. When switches S1, S2 and S3' are turned on and conducting, or when switches S1, S2' and S3 are turned on and conducting, the output voltage is equal to +Vdc/4. When switches S1, S2' and S3' are turned on and conducting, or when switches S1', S2 and S3 are turned on and conducting, the output voltage is zero (neutral point at the center of the DC link). When switches S1', S2 and S3' are turned on and conducting, or when switches S1', S2' and S3 are turned on and conducting, the output voltage is equal to -Vdc/4. When switches S1', S2' and S3' are turned on and conducting, the output voltage is equal to -Vdc/2.

**Table 6**

| **Condition of switching device** | | | **Inverter output phase voltage** |
|---|---|---|---|
| **S1** | **S2** | **S3** | **V_{AN}** |
| 1 | 1 | 1 | +V_{dc}/2 |
| 1 | 1 | 0 | +V_{dc}/4 |
| 1 | 0 | 1 | +V_{dc}/4 |
| 1 | 0 | 0 | 0 |
| 0 | 1 | 1 | 0 |
| 0 | 1 | 0 | -V_{dc}/4 |
| 0 | 0 | 1 | -V_{dc}/4 |
| 0 | 0 | 0 | -V_{dc}/2 |

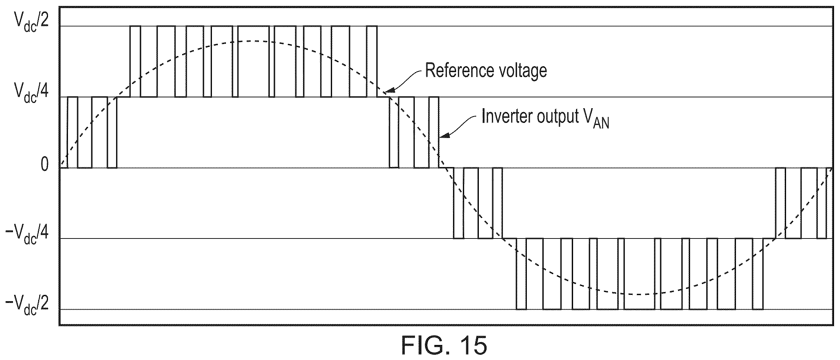

Figure 15 shows phase to neutral voltage produced by one leg of the inverter. In particular, it is shown that by controlling the switching states, the ANPC inverter can produce a stepped waveform that approximates a sine wave. Pulse width modulation (PWM) techniques can be used to control the order of the switching of the power switches, thus ensuring that the output waveform is as close to a sine wave as possible.

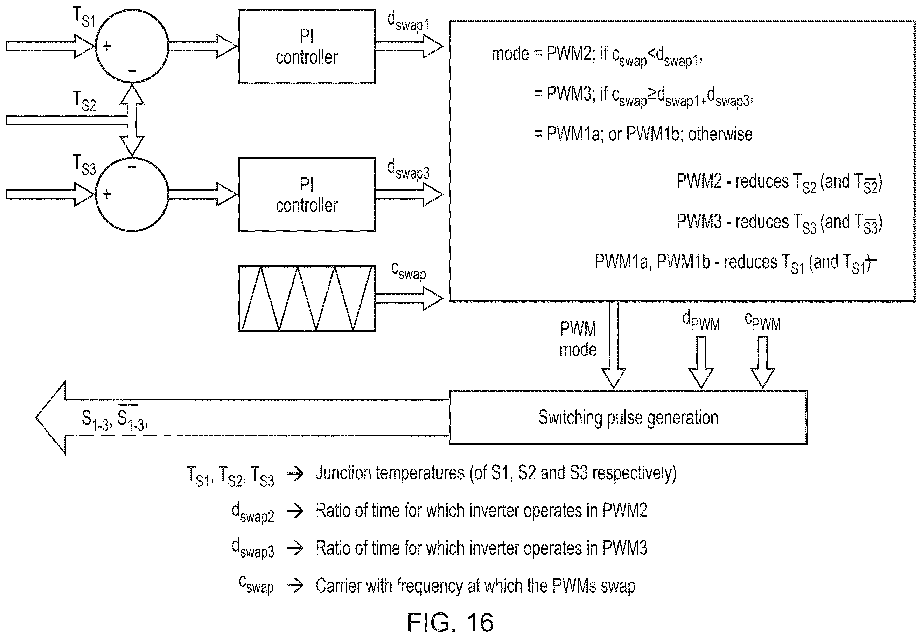

Figure 16 shows two PI controllers. As shown in Figure 16, T_{S1} and T_{S2} are input into the first PI controller and T_{S2} and T_{S3} are input into the second PI controller.

For each half cycle, there are four different combinations of switches that may be used, and four possible PWM modes, as detailed in the tables below.

### Positive half-cycle

**Table 7**

| **Mode** | **Combina tion** | **S1** | **S2** | **S3** | **Temperatur es** | **i_{fc}** |
|---|---|---|---|---|---|---|
| PWM3 | V4 V6 V8 | 0↔1↔1 | 1↔0↔1 | 1↔1↔1 | T_{S3} <T_{S1}<T_{S2} | 0↔-iₐ↔0 |
| PWM2 | V4 V7 V8 | 0↔1↔1 | 1↔1↔1 | 1↔0↔1 | T_{S2}<T_{S1}<T_{S3} | 0↔+iₐ↔0 |
| PWM1b | V5 V6 V8 | 1↔1↔1 | 0↔0↔1 | 0↔1↔1 | T_{S1}<T_{S2}~T_{S3} | 0↔-iₐ↔0 |
| PWM1a | V5 V7 V8 | 1↔1↔1 | 0↔1↔1 | 0↔0↔1 | T_{S1}<T_{S2}~T_{S3} | 0↔+iₐ↔0 |

### Negative half-cycle

**Table 8**

| **Mode** | **Combina tion** | **S1** | **S2** | **S3** | **Temperatur es** | **i_{fc}** |
|---|---|---|---|---|---|---|
| PWM1a | V4 V2 V1 | 0↔0↔0 | 1↔0↔0 | 1↔1↔0 | T_{S1}<T_{S2}~T_{S3} | 0↔-iₐ↔0 |
| PWM1b | V4 V3 V1 | 0↔0↔0 | 1↔1↔0 | 1↔0↔0 | T_{S1}<T_{S2}~T_{S3} | 0↔+iₐ↔0 |
| PWM2 | V5 V2 V1 | 1↔0↔0 | 0↔0↔0 | 0↔1↔0 | T_{S2}<T_{S1}<T_{S3} | 0↔-iₐ↔0 |
| PWM3 | V5 V3 V1 | 1↔0↔0 | 0↔1↔0 | 0↔0↔0 | T_{S3}<T_{S1}<T_{S2} | 0↔+iₐ↔0 |

The effect of PWM1a and PWM1b on the temperatures of power switches are same or similar. This provides a degree of freedom of choice, that can be utilized for other controls, for example the voltage balance control of the flying capacitor.

The switch pairs (S1, S1'), (S2, S2') and (S3, S3') have identical losses amongst themselves. Hence, it is sufficient to consider the temperatures of one of the switches from each pair for the control. In this example S1, S2 and S3 are considered.

Based on the output of the two PI controllers, a control signal is generated in order to apply the selected PWM mode. The controller therefore manages the operation of the ANPC inverter based knowledge of the junction temperatures of the switches, using four different PWM modes to balance the thermal load between switches S1, S2 and S3 in order to achieve an improved balance of junction temperatures across all of the power switches.

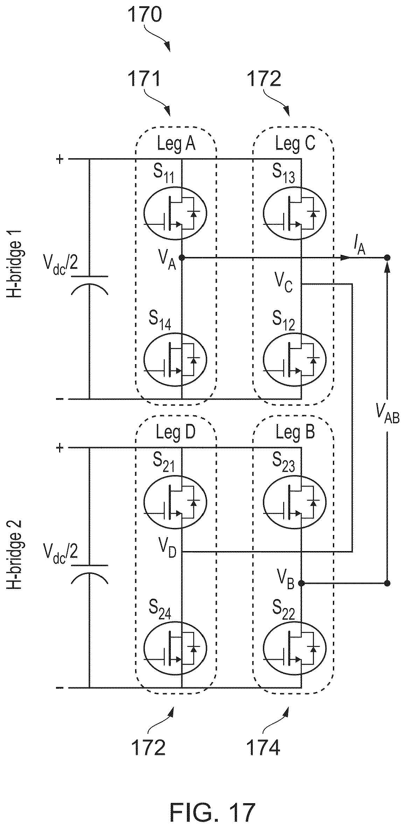

Figure 17 shows a five level cascaded H bridge (CHB) inverter 170 having four legs Leg A 171, Leg B 172, Leg C 173, Leg D 174. Among the four legs, any one leg can be chosen to operate at high frequency (HF) and another one to operate at medium frequency (MF). The remaining two may operate at low frequency (LF). The power switches on the leg that operates at high frequency experience the highest losses and junction temperatures, while the power switches on the two legs that operate at low frequency experiences lowest losses.

Table 8 can be used to identify PWM methods that result in least losses in each of the four legs (LF legs yield lowest temperatures). Table 8 shows the switching condition of the low frequency legs, medium frequency leg, and high frequency leg and the inverter output voltage. The switching condition '1' of a leg indicates that the upper switch of the leg is ON and conducting, and therefore the output terminal of the leg is connected to the positive input terminal. Similarly, a switching condition '0' of a leg indicates that the lower switch in the leg is ON and conducting, which causes the output terminal of the leg to be connected to the negative terminal at the input.

Table 8 may be used to define PWM methods that may reduce temperature of power switches in any specific leg. For example, consider a PWM method, PWM_{A}, wherein leg A, along with one other leg (B, C or D), operates at fundamental frequency. Hence, PWM_{A} will result in yielding reduced temperature in power switches of leg A. Similarly, PWM_{B}, PWM_{C} and PWM_{D} result in reduced temperatures in legs B, C and D.

**Table 9**

| **Half cycle** | | **LF legs*** | **MF leg*** | **HF leg*** | **Inverter output voltage V_{AB}** |
|---|---|---|---|---|---|
| Positive | V_{dc}>V_{AB}>V_{dc}/2 | 11 | 1 | 1 | V_{dc} |
| | V_{dc}/2>V_{AB}>0 | | | 0 | V_{dc}/2 |
| | | | 0 | 1 | V_{dc}/2 |
| | | | | 0 | 0 |
| Negative | 0>V_{AB}>-V_{dc}/2 | 00 | 1 | 1 | 0 |
| | | | | 0 | -V_{dc}/2 |
| | -V_{dc}/2>V_{AB}>-V_{dc} | | 0 | 1 | -V_{dc}/2 |
| | | | | 0 | -V_{dc} |

| | | | | | |
|---|---|---|---|---|---|
| * 1 and 0 indicate that the output terminal of the corresponding leg is connected to the + and - input terminals respectively | | | | | |

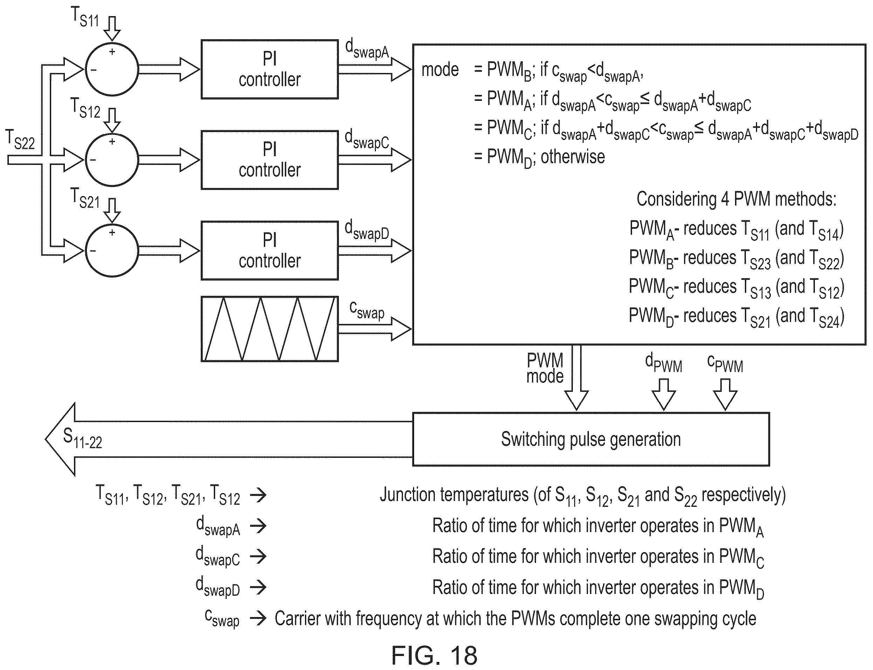

Figure 18 shows three PI controllers. As shown in Figure 18, the difference between TS11 and TS22 are input into the first PI controller, the difference between TS12 and TS22 are input into the second PI controller and the difference between TS21 and TS22 are input into the third PI controller. The control algorithm of the present disclosure can then be used to achieve equal temperature distribution by alternating between these PWM methods based on the temperature information.

In this example, four PWM methods, PWMA, PWMB, PWMC and PWMD, are used, each of which result in lowest losses in the switches of legs A, B, C and D, respectively. The ratios at which each of these PWMs operate are determined by the control algorithm of the present disclosure.

The skilled person will readily appreciate that various alterations or modifications may be made to the above-described aspects of the disclosure without departing from the scope of the disclosure. For example, features of two or more of the above examples may be combined and still fall within the scope of the present disclosure.

### Numbered aspects

By way of non-limiting example, some aspects of the disclosure are set out in the following numbered clauses.

Numbered Clause 1. A method of balancing junction temperatures between at least two power switches of a multilevel converter, the method comprising:
receiving a junction temperature of each of the at least two power switches;
determining a difference in junction temperature between the at least two power switches;
defining a ratio of operating time for which the multilevel converter operates using a first pulse width modulation, PWM, mode of a plurality of PWM modes based on closed loop control in order to reduce the difference in junction temperature of the at least two power switches; and
generating a control signal to operate the multilevel converter using the first PWM mode for the ratio of operating time.

Numbered Clause 2. The method of Numbered Clause 1, further comprising:
generating a control signal to operate the multilevel converter using the remainder of the plurality of PWM modes for a remainder of the time.

Numbered Clause 3. The method of Numbered Clause 1 or 2, further comprising:
defining a ratio of operating time for at least one other PWM mode based on closed loop control in order to reduce the difference in junction temperature of the at least two power switches; and
generating a control signal to operate the multilevel converter using the ratios of operating time for the at least one other PWM mode.

Numbered Clause 4. The method of any preceding Numbered Clause, further comprising:
adjusting the ratio(s) of operating time dynamically based on real time junction temperature information of the at least two power switches.

Numbered Clause 5. The method of any preceding Numbered Clause, further comprising:
applying a predefined swapping period for operating the plurality of PWM modes.

Numbered Clause 6. The method of Numbered Clause 5, wherein the predefined swapping period is defined by a minimum swapping frequency for swapping between the plurality of PWM modes.

Numbered Clause 7. The method of any preceding Numbered Clause, wherein the closed loop control is implemented using linear control.

Numbered Clause 8. The method of Numbered Clause 7, wherein the closed loop linear control is implemented using a proportional, P, controller, a proportional-integral, PI, controller, or a proportional-integral-derivative, PID, controller.

Numbered Clause 9. The method of any preceding Numbered Clause, wherein the reducing the difference in junction temperature of the at least two power switches comprises minimising the difference in junction temperature of the at least two power switches.

Numbered Clause 10. The method of any preceding Numbered Clause, further comprising:
selecting the at least two power switches of the multilevel converter that have different thermal losses and/or different thermal loss profiles.

Numbered Clause 11. The method of any preceding Numbered Clause, wherein receiving the junction temperature of the two or more power switches comprises:
modelling the junction temperature of the at least two power switches based on look up tables.

Numbered Clause 12. The method of any of Numbered Clauses 1 to 11, wherein receiving the junction temperature of the two or more power switches comprises:
measuring the junction temperature by direct die temperature measurement for each of the two or more power switches.

Numbered Clause 13. The method of Numbered Clause 12, wherein measuring the junction temperature by direct die temperature measurement for each of the two or more power switches comprises measuring the junction temperatures using a highly integrated SiC-Cascode power switch.

Numbered Clause 14. The method of any preceding Numbered Clause, wherein the ratio of operating time in one or more of the PWM modes is selected for one phase of the multilevel converter.

Numbered Clause 15. The method of any of Numbered Clauses 1 to 13, wherein the ratio of operating time in one or more of the PWM modes is selected for each phase of the multilevel converter.

Numbered Clause 16. A system for balancing junction temperatures between at least two power switches of a multilevel converter, the system comprising:
a closed loop controller configured to: receive a junction temperature of each of the at least two power switches;
determine a difference in junction temperature between the at least two power switches;
define a ratio of operating time for which the multilevel converter operates using a first pulse width modulation, PWM, mode of a plurality of PWM modes based on closed loop control in order to reduce the difference in junction temperature of the at least two power switches; and
generate a control signal to operate the multilevel converter using the first PWM mode for the ratio of operating time.

Numbered Clause 17. The system of Numbered Clause 16, wherein the closed loop controller is a linear closed loop controller.

Numbered Clause 18. The system of Numbered Clause 16 or 17, further comprising the multilevel converter.

Numbered Clause 19. The system of Numbered Clause 18, wherein the multilevel converter is an inverter, preferably an active neutral point clamp, ANPC, inverter.

Numbered Clause 20. The system of Numbered Clause 18 or 19, wherein the multilevel converter comprises three pairs of power switches in a half-bridge leg, and the at least two power switches belong to different pairs of the three pairs of power switches.

## Claims

1. A method of balancing junction temperatures between at least two power switches of a multilevel converter, the method comprising:
receiving a junction temperature of each of the at least two power switches;
determining a difference in junction temperature between the at least two power switches;
defining a ratio of operating time for which the multilevel converter operates using a first pulse width modulation, PWM, mode of a plurality of PWM modes based on closed loop control in order to reduce the difference in junction temperature of the at least two power switches; and
generating a control signal to operate the multilevel converter using the first PWM mode for the ratio of operating time.

2. The method of claim 1, further comprising:
generating a control signal to operate the multilevel converter using the remainder of the plurality of PWM modes for a remainder of the time.

3. The method of claim 1 or 2, further comprising:
defining a ratio of operating time for at least one other PWM mode based on closed loop control in order to reduce the difference in junction temperature of the at least two power switches; and
generating a control signal to operate the multilevel converter using the ratios of operating time for at least one other PWM mode.

4. The method of any preceding claim, further comprising:
adjusting the ratio(s) of operating time dynamically based on real time junction temperature information of the at least two power switches.

5. The method of any preceding claim, further comprising:
applying a predefined swapping period for operating the plurality of PWM modes, preferably wherein the predefined swapping period is defined by a minimum swapping frequency for swapping between the plurality of PWM modes.

6. The method of any preceding claim, wherein the closed loop control is implemented using linear control, preferably wherein the closed loop linear control is implemented using a proportional, P, controller, a proportional-integral, PI, controller, or a proportional-integral-derivative, PID, controller.

7. The method of any preceding claim, wherein the reducing the difference in junction temperature of the at least two power switches comprises minimising the difference in junction temperature of the at least two power switches.

8. The method of any preceding claim, further comprising:
selecting the at least two power switches of the multilevel converter that have different thermal losses and/or different thermal loss profiles.

9. The method of any preceding claim, wherein receiving the junction temperature of the two or more power switches comprises:
modelling the junction temperature of the at least two power switches based on look up tables.

10. The method of any preceding claim, wherein receiving the junction temperature of the two or more power switches comprises:
measuring the junction temperature by direct die temperature measurement for each of the two or more power switches, preferably wherein measuring the junction temperature by direct die temperature measurement for each of the two or more power switches comprises measuring the junction temperatures using a highly integrated SiC-Cascode power switch.

11. The method of any preceding claim, wherein the ratio of operating time in one or more of the PWM modes is selected for one phase of the multilevel converter.

12. The method of any preceding claim, wherein the ratio of operating time in one or more of the PWM modes is selected for each of the multilevel converter.

13. A system for balancing junction temperatures between at least two power switches of a multilevel converter, the system comprising:
a closed loop controller configured to:
receive a junction temperature of each of the at least two power switches;
determine a difference in junction temperature between the at least two power switches;
define a ratio of operating time for which the multilevel converter operates using a first pulse width modulation, PWM, mode of a plurality of PWM modes based on closed loop control in order to reduce the difference in junction temperature of the at least two power switches, and
generate a control signal to operate the multilevel converter using the first PWM mode for the ratio of operating time.

14. The system of claim 13, wherein the closed loop controller comprises a linear closed loop controller.

15. The system of claim 13 or 14, further comprising the multilevel converter, preferably wherein the multilevel converter is an inverter, more preferably an active neutral point clamp, ANPC, inverter, yet more preferably wherein the multilevel converter comprises three pairs of power switches in a half-bridge leg, and the at least two power switches belong to different pairs of the three pairs of power switches.
